# EUROPEAN PATENT APPLICATION

(11) **EP 4 808 133 A1**
(43) Date of publication of application: **16.09.2026**
(21) Application number: 23959850.1
(22) Date of filing: 30.11.2023
(51) Int. Cl.: H04N 21/439

(54) **VIDEO TRANSMISSION METHOD, AND DEVICE**

(71) Applicant: Huawei Technologies Co., Ltd., Shenzhen, Guangdong 518129 (CN)
(72) Inventor: FENG, Jiale, Shenzhen, Guangdong 518129 (CN); QIAO, Houcai, Shenzhen, Guangdong 518129 (CN); ZHOU, Weiguang, Shenzhen, Guangdong 518129 (CN); QI, Jian, Shenzhen, Guangdong 518129 (CN)
(74) Representative: Goddar, Heinz J.
(86) International application number: PCT/CN2023/135442
(87) International publication number: WO 2025/111933

(57) **Abstract**

A video transmission method and a device are disclosed, and relate to the field of multimedia technologies. A source device may directly query a capability of a sink device for processing a compressed video, and only when the sink device has a capability of decompressing a compressed video, the source device transmits a first VBP, a compression parameter packet, and a compressed video to the sink device. A video compression mode field included in the first VBP is a first value, the first value indicates that a video compression mode is a compressed video, and the compression parameter packet indicates compression parameter information of the compressed video. This avoids an ineffective communication process between devices and occupation of a transmission resource bandwidth between the devices because the sink device does not have the capability of decompressing a compressed video. In addition, in this application, the compressed video may be transmitted, so that impact on transmission efficiency because the compressed video is transmitted by using a DP protocol or an HDMI protocol is avoided. This helps improve data transmission robustness and efficiency of transmitting compressed data.

## Description

### TECHNICAL FIELD

This application relates to the field of multimedia technologies, and in particular, to a video transmission method and a device.

### BACKGROUND

With the development of big data (big data), artificial intelligence (artificial intelligence, AI), and cloud computing technologies, various types of multimedia data continuously emerge. For example, video data is transmitted in a wired manner between different devices. The different devices may transmit the video data through a display port (display port, DP) bus or a high-definition multimedia interface (high-definition multimedia interface, HDMI) bus. However, although a DP protocol or an HDMI protocol usually supports video transmission, transmission efficiency is affected when a compressed video is transmitted by using the DP protocol or the HDMI protocol.

### SUMMARY

This application provides a video transmission method and a device, to resolve a problem that, although a DP protocol or an HDMI protocol usually supports video transmission, transmission efficiency is affected when a compressed video is transmitted by using the DP protocol or the HDMI protocol.

The following technical solutions are used in this application.

According to a first aspect, this application provides a video transmission method. The video transmission method is performed by a source device or a chip in the source device. For example, the source device may be a set-top box. For example, the video transmission method includes: querying a capability of a sink device for processing a compressed video; and when the sink device has a capability of decompressing a compressed video, transmitting a first vertical blanking packet (vertical blanking packet, VBP), a compression parameter packet, and a compressed video to the sink device. A video compression mode field included in the first VBP is a first value, and the first value indicates that a video compression mode is a compressed video. The compression parameter packet indicates compression parameter information of the compressed video.

In this application, the source device may directly query the capability of the sink device for processing a compressed video, and only when the sink device has the capability of decompressing a compressed video, the source device transmits the first vertical blanking packet VBP, the compression parameter packet, and the compressed video to the sink device. This avoids an ineffective communication process between devices and occupation of a transmission resource bandwidth between the devices because the sink device does not have the capability of decompressing a compressed video. In addition, in this application, the compressed video may be transmitted, so that impact on transmission efficiency because the compressed video is transmitted by using a DP protocol or an HDMI protocol is avoided. This helps improve data transmission robustness and efficiency of transmitting compressed data.

For example, the first value may be 1b.

In a possible example, a video stream transmitted by the source device to the device sink device includes the first VBP, the compression parameter packet, and the compressed video.

For example, each of a plurality of video frames included in the video stream includes the first VBP, the compression parameter packet, and the compressed video.

In a possible implementation, transmitting the compressed video to the sink device includes: transmitting an active video packet (audio sample packet, AVP) to the sink device, where the active video packet AVP is used to carry the compressed video.

In this application, the compressed video is carried by using the AVP, so that the source device transmits the compressed video to the sink device. This helps improve efficiency of transmitting the compressed video.

In a possible example, one AVP carries a plurality of groups of 8-bit (bit) data. In other words, the AVP carries the compressed video at a granularity of 8 bits.

In a possible implementation, the compressed video conforms to a perceptual lossless compression (perceptual lossless compression, PLC) standard.

In comparison with a DP protocol or an HDMI protocol in which only a compressed video obtained in a specific compression manner (for example, display stream compression (display stream compression, DSC)) is transmitted, in this application, a compressed video that conforms to the PLC standard may be transmitted, and the specific compression manner does not include the PLC. This avoids impact on transmission of the compressed video that conforms to the PLC standard, and improves data transmission robustness and efficiency of transmitting the compressed video that conforms to the PLC standard.

In a possible implementation, a descriptive information type byte included in the compression parameter packet is a second value.

For example, the descriptive information type byte in the compression parameter packet is fixed to 0x02.

In a possible implementation, if one compression parameter packet is transmitted to the sink device, a packet start flag included in the compression parameter packet is 1, and a packet end flag included in the compression parameter packet is 1.

For example, in a flags (flags) field in a packet header of the compression parameter packet, S=1 and E=1. S indicates a packet start flag, and E indicates a packet end flag.

In a possible implementation, if a plurality of compression parameter packets are transmitted to the sink device, a packet start flag included in a 1^{st} compression parameter packet among the plurality of compression parameter packets is 1, and a packet end flag included in a last compression parameter packet among the plurality of compression parameter packets is 1.

In this application, because the compression parameter packet includes the packet start flag and the packet end flag, the packet start flag and the packet end flag may enable the sink device to determine a start or an end of a compression parameter packet sent by the source device to the sink device. This helps improve efficiency of the sink device to parse the compression parameter packet, and further improves efficiency of the sink device to decode the compressed video based on a compression packet parameter carried in the compression parameter packet.

For example, if the compression parameter information of the compressed video exceeds 32 bytes, the compression parameter information requires a plurality of compression parameter packets for carrying. A flags field in the 1^{st} compression parameter packet among the plurality of compression parameter packets corresponds to S=1 and E=0. A flags field in the last compression parameter packet among the plurality of compression parameter packets corresponds to S=0 and E=1.

In a possible implementation, the source device is connected to the sink device through an audio/video interface network.

For example, the audio/video interface network is a unified multimedia interconnection interface bus.

In a possible implementation, if transmission of the compressed video is completed, the video transmission method further includes: transmitting a second vertical blanking packet VBP and an uncompressed video to the sink device, where a video compression mode field included in the second VBP is a third value, and the third value indicates that a video compression mode is an uncompressed video.

For example, the third value may be 0b.

In this application, after transmission of the compressed video is completed, the video compression mode field in the VBP is changed from the first value to the third value, so that the sink device can be reminded that currently transmitted video data is an uncompressed video. In this way, the sink device can perform corresponding processing on the uncompressed video in time, thereby improving efficiency of the sink device to process the uncompressed video.

According to a second aspect, this application provides a video transmission method. The video transmission method is performed by a sink device or a chip in the sink device. For example, the sink device may be a display. For example, the sink device provides a capability, queryable by a source device, of processing a compressed video, and when the sink device has a capability of decompressing a compressed video, the video transmission method includes: receiving a first vertical blanking packet VBP, a compression parameter packet, and the compressed video that are transmitted by the source device, where a video compression mode field included in the first VBP is a first value, the first value indicates that a video compression mode is a compressed video, and the compression parameter packet indicates compression parameter information of the compressed video.

In this application, the sink device has the capability, queryable by the source device, of processing a compressed video, so that the source device can directly query the capability of the sink device for processing a compressed video, and only when the sink device has the capability of decompressing a compressed video, the source device transmits the first vertical blanking packet VBP, the compression parameter packet, and the compressed video to the sink device. This avoids an ineffective communication process between devices and occupation of a transmission resource bandwidth between the devices because the sink device does not have the capability of decompressing a compressed video. In addition, in this application, the compressed video may be transmitted. This helps avoid impact on transmission efficiency because the compressed video is transmitted by using a DP protocol or an HDMI protocol, and improve data transmission robustness and efficiency of transmitting the compressed data.

For another possible implementation of the second aspect, refer to any one of the possible implementations of the first aspect. Details are not described herein again.

According to a third aspect, this application provides a video apparatus. The video apparatus includes a module configured to perform the method according to the first aspect or any one of the possible implementations of the first aspect, or the video apparatus includes a module configured to perform the method according to the second aspect or any one of the possible implementations of the second aspect.

According to a fourth aspect, this application provides a chip. The chip includes a control circuit and an interface circuit. The control circuit is configured to query a capability of a sink device for processing a compressed video, and the control circuit and the interface circuit collaborate to perform the first aspect or any one of the possible implementations of the first aspect; and/or the interface circuit is configured to receive a first vertical blanking packet VBP, a compression parameter packet, and the compressed video that are transmitted by the source device, a video compression mode field included in the first VBP is a first value, the first value indicates that a video compression mode is a compressed video, the compression parameter packet indicates compression parameter information of the compressed video, and the control circuit and the interface circuit collaborate to perform any one of the second aspect or the possible implementations of the second aspect. For example, the chip may be an audio/video sending adapter in the sink device shown in the first aspect, or the chip may be an audio/video receiving adapter in the sink device shown in the second aspect.

According to a fifth aspect, this application provides a video processing device. The video processing device may be the source device in the first aspect. The video processing device includes a storage and a transceiver. The storage is configured to store a compressed video. The transceiver is configured to transmit a first vertical blanking packet VBP, a compression parameter packet, and the compressed video. A video compression mode field included in the first VBP is a first value, and the first value indicates that a video compression mode is a compressed video. The compression parameter packet indicates compression parameter information of the compressed video. The storage and the transceiver are configured to collaboratively perform the method according to the first aspect or any one of the optional implementations of the first aspect. For example, the video processing device is configured to implement a function of the source device in the first aspect.

According to a sixth aspect, this application provides a display device. The display device may also be referred to as an audio/video playing device, a video playing device, or the sink device in the second aspect. The display device includes a transceiver and a display unit. The transceiver is configured to receive a first vertical blanking packet VBP, a compression parameter packet, and a compressed video. A video compression mode field included in the first VBP is a first value, the first value indicates that a video compression mode is a compressed video, and the compression parameter packet indicates compression parameter information of the compressed video. The display unit is configured to: process and display the first vertical blanking packet VBP, the compression parameter packet, and the compressed video. The transceiver and the display unit are configured to collaboratively perform the method according to the second aspect or any one of the optional implementations of the second aspect. For example, the display device is configured to implement a function of the sink device in the second aspect.

According to a seventh aspect, this application provides a video transmission system. The audio transmission system includes the video processing device provided in the fifth aspect and the display device provided in the sixth aspect. The video processing device is connected to the display device through an audio/video interface network. The video processing device is configured to perform a function of the source device in the first aspect, and the display device may be configured to implement a function of the sink device in the second aspect. Therefore, the video transmission system can also implement beneficial effects of the methods according to the first aspect and the second aspect. Details are not described herein again.

According to an eighth aspect, this application provides a computer-readable storage medium. The computer-readable storage medium includes computer software instructions. When the computer software instructions are run on a computing device, the computing device is enabled to perform operation steps of the method according to the first aspect or any one of the possible implementations of the first aspect or perform operation steps of the method according to the second aspect or any one of the possible implementations of the second aspect. For example, the computing device is the foregoing source device or sink device.

According to a ninth aspect, this application provides a computer program product. When the computer program product runs on a computer, a computing device is enabled to perform operation steps of the method according to the first aspect or any one of the possible implementations of the first aspect or perform operation steps of the method according to the second aspect or any one of the possible implementations of the second aspect. For example, the computer is the foregoing source device or sink device.

For beneficial effects of the third aspect to the ninth aspect, refer to the descriptions of any one of the implementations of the first aspect or the second aspect. Details are not described herein again. In this application, on the basis of the implementations according to the foregoing aspects, the implementations may be further combined to provide more implementations.

### BRIEF DESCRIPTION OF DRAWINGS

FIG. 1 is a diagram of a video transmission system according to this application;
FIG. 2 is a diagram of an audio/video encoding and decoding system according to this application;
FIG. 3 is a schematic flowchart 1 of a video transmission method according to this application;
FIG. 4 is a diagram of a structure of a video frame according to this application;
FIG. 5 is a diagram of AVP carrying according to this application;
FIG. 6 is a schematic flowchart 2 of a video transmission method according to this application;
FIG. 7 is a diagram of a structure of a video apparatus according to this application;
FIG. 8 is a diagram of a structure of a video processing device according to this application; and
FIG. 9 is a diagram of a structure of a sink device according to this application.

### DESCRIPTION OF EMBODIMENTS

This application provides a video transmission method. The video transmission method includes: A source device queries a capability of a sink device for processing a compressed video, and when the sink device has a capability of decompressing a compressed video, the source device transmits a first VBP, a compression parameter packet, and a compressed video to the sink device. A video compression mode field included in the first VBP is a first value, the first value indicates that a video compression mode is a compressed video, and the compression parameter packet indicates compression parameter information of the compressed video.

In this application, the source device may directly query the capability of the sink device for processing a compressed video, and only when the sink device has the capability of decompressing a compressed video, the source device transmits the first VBP, the compression parameter packet, and the compressed video to the sink device. This avoids an ineffective communication process between devices and occupation of a transmission resource bandwidth between the devices because the sink device does not have the capability of decompressing a compressed video. In addition, in this application, the compressed video may be transmitted, so that impact on transmission efficiency because the compressed video is transmitted by using a DP protocol or an HDMI protocol is avoided. This helps improve data transmission robustness and efficiency of transmitting compressed data.

The technical solutions in this application may be applied to a future audio/video transmission technology or audio/video standard in addition to a current audio/video transmission technology or audio/video standard. Terms used in embodiments of this application are merely used to explain specific embodiments of this application, but are not intended to limit this application. The following first briefly describes some concepts that may be used in this application.

Video streaming (video streaming) refers to transmission of video data. For example, a video stream can be processed as a stable and continuous stream over a network. The video stream includes a plurality of video frames, and each video frame corresponds to one frame of image.

Descriptive information packet (descriptive information packet, DIP or DIP packet): The descriptive information packet is used to describe different data in a data packet.

A perceptual lossless compression (perceptual lossless compression, PLC) video is a video (or referred to as audio/video data) encoded according to a PLC standard. The PLC video can be determined as reaching a subjectively lossless standard. Compression procedures included in PLC are mainly four parts: signal processing, mode prediction, quantization, and coefficient coding.

During signal processing, the PLC divides a signal into rectangular slices of a same size for parallel processing. A minimum unit during coding is a group of 16×2 pixels. In an interface level, an output bit stream is allowed to be divided into sub-stream segments of a fixed size based on a channel to which the output bit stream belongs, and the sub-stream segments are output after being interleaved and reassembled. During mode prediction, the PLC includes three types of prediction modes: point prediction, common intra prediction, and block replication intra prediction. A bit cost (including a code length of a quantized residual) and a reconstruction distortion degree of each mode jointly determine to obtain an optimal coding mode of a coding unit. It should be noted that, while retaining a texture fitting advantage of a coding unit of a largest size in a comparable standard, the PLC supports highly parallel hardware processing with the help of a dependency elimination design of a prediction mode of the PLC.

During quantization and coefficient coding, the PLC uses shift quantization and semi-fixed-length coefficient coding to achieve energy compaction for prediction residuals while ensuring low hardware costs. In addition, the PLC supports fine-tuning of a quantization parameter at a specific point pixel-wisely. This can significantly optimize subjective reconstruction quality of texture details without increasing bit overheads.

In embodiments, a video is a general term. The video includes a sequence of a plurality of consecutive frames of images, and one frame corresponds to one image. Audio/video is an information application technology term, and refers to video, audio, or multimedia content including video and audio.

To make descriptions of the following embodiments clear and brief, related technologies are first described.

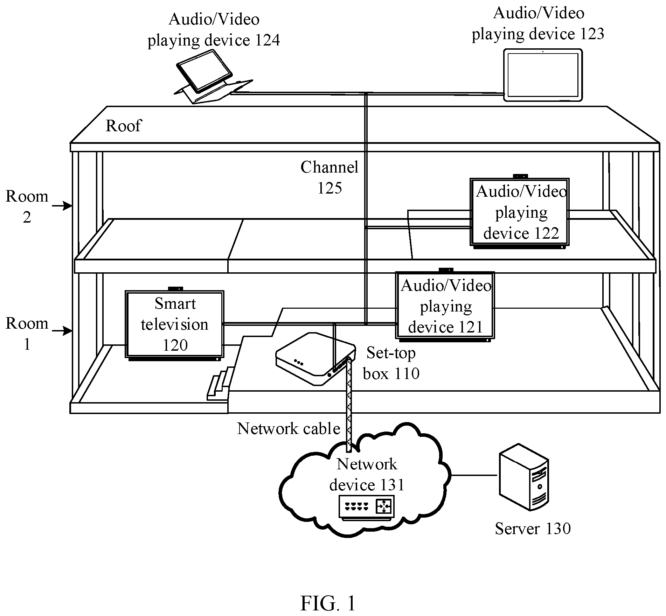

FIG. 1 is a diagram of a video transmission system according to this application. A video processing process may include but is not limited to video capturing, video encoding, video transmission, video decoding, and playing processes.

The video transmission system in FIG. 1 includes a set-top box 110, a smart television 120, a plurality of audio/video playing devices, and a server 130. The set-top box 110 accesses an operator network through a network cable, and may receive an audio/video stream from the server 130. The network may implement an audio/video transmission function. The network may include one or more network devices. For example, a network device 131 may be a router, a switch, or the like. In some optional implementations, the set-top box 110 and the server 130 may alternatively communicate with each other through wireless communication. This is not limited in this application.

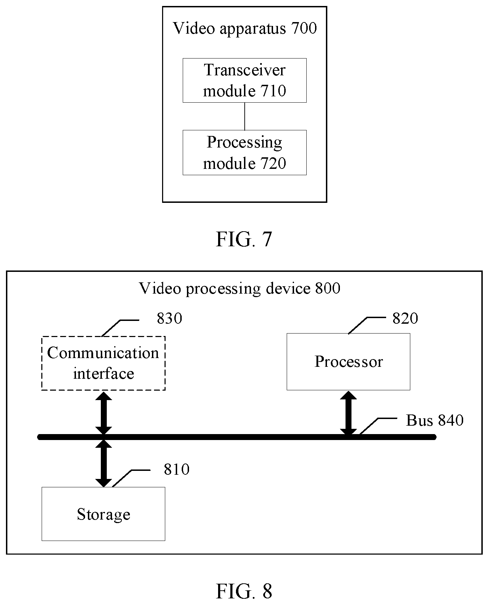

The set-top box 110 is an audio/video processing device, and is configured to implement functions such as receiving, processing, and pushing a video stream or an audio/video stream. In some possible cases, the set-top box 110 may also be referred to as an Internet television set-top box, a network high-definition player, or the like. For example, the set-top box 110 may be a television box provided by a network operator, or may be a television box purchased by a user. For hardware implementation of the set-top box 110, refer to the following descriptions of FIG. 7. Details are not described herein again.

The smart television 120 is a sink device with an audio/video processing function, and implements functions such as receiving, processing, pushing, and playing of a video stream or an audio/video stream. In some possible cases, the smart television 120 may be an audio/video device, for example, a conference tablet, a smart television, or a projector. This is not limited in this application. For hardware implementation of the smart television 120, refer to the following descriptions of FIG. 7 or FIG. 8. Details are not described herein again.

The plurality of audio/video playing devices include an audio/video playing device 121 to an audio/video playing device 124. For example, these audio/video playing devices may include but are not limited to a multimedia control platform or another device that supports an audio/video playing function, for example, a virtual reality (virtual reality, VR) terminal device or an augmented reality (augmented reality, AR) terminal device. For hardware implementation of the audio/video playing device, refer to the following descriptions of FIG. 8. Details are not described herein again.

In this embodiment, the set-top box 110 may be connected to the smart television 120 through a channel 125, the set-top box 110 may also be connected to each audio/video playing device through the channel 125, and the smart television 120 may also be connected to each audio/video playing device through the channel 125. For example, the channel 125 may be a signal cable/link/network/channel that supports video transmission and audio/video transmission. For example, the channel 125 is a unified multimedia interconnection channel, and may also be referred to as a unified multimedia interconnection network.

The unified multimedia interconnection channel is a channel connected based on a unified multimedia interconnection interface provided by a source device and a sink device. The unified multimedia interconnection channel may be used to connect to a charger to charge an electronic device (for example, the foregoing smart television, set-top box, or audio/video playing device), may be used to transmit data between the electronic device and a peripheral device, or may be used to connect to a headset to play audio through the headset. The unified multimedia interconnection interface may be further configured to connect to another electronic device, for example, an AR device. When the unified multimedia interconnection channel is used to implement an inter-device data communication function, the unified multimedia interconnection channel may support uncompressed video transmission and compressed video transmission, and may also support a plurality of advanced features such as quick video transmission (quick video transport, QVT), automatic low delay (auto low latency mode, ALLM), and dynamic frame rate refresh (dynamic frame rate refresh, DFR). In addition, the unified multimedia interconnection channel may also support LPCM-format audio and video defined by IEC 60958 and a plurality of high-dynamic range (high-dynamic range, HDR) protocols such as an HDR protocol specified by T/UWA 005.1-2022, for example, HDR vivid (HDR Vivid). Unified multimedia interconnection also supports encryption control and protection for transmission of data such as audio and video. In some optional implementations, the channel 125 may also be another type of channel, and can implement a function supported by the unified multimedia interconnection channel.

In this embodiment, the unified multimedia interconnection interface is applicable to an audio/video device, a third-party protocol (for example, universal serial bus (universal serial bus, USB)/peripheral component interconnect express (peripheral component interconnect express, PCIe)/Ethernet) device, or the like to transmit a high-speed signal. A device that uses the unified multimedia interconnection interface is referred to as the unified multimedia interconnection device, and a system formed by connecting a plurality of unified multimedia interconnection devices is referred to as a unified multimedia interconnection system. The unified multimedia interconnection interface provides the following capabilities: 1. bidirectional audio/video transmission, meeting a requirement of a device such as a television, a PC, and a mobile phone for audio/video transmission, and supporting audio/video content transmission protection and visually lossless compression; 2. third-party protocol data transmission, implementing interaction between the unified multimedia interconnection device and the third-party protocol device, for example, a supported third-party protocol includes USB3, with subsequent support for Ethernet, PCIe, and the like; and 3. bidirectional power supply, meeting a power supply requirement for an electronic device whose power does not exceed a specific power value, for example, the specific power value is 480 W, 500 W, or another value.

It should be noted that, in some examples, a communication network formed by a channel used to implement inter-device audio/video transmission is also referred to as an audio/video interface network, an audio-video interface network, or the like.

The server 130 may be an application server or an authentication and authorization server. The server 130 may provide a video service, a game service, a message service, a music service, an authentication and authorization service, and the like. In an example, functions of a plurality of services may be integrated on the server 130. For example, the game service and the music service may be deployed on the server 130. In another example, alternatively, functions of a part of services may be integrated on the server 130. For example, a part of the game service and a part of the video service are deployed on the server 130. The server 130 may further provide a plurality of virtual machines by using a virtualization technology, and the virtual machines provide various services. A deployment form of the server is not limited in embodiments of this application. The network device 131 is connected to the server 130 in a wireless or wired manner. FIG. 1 is merely a diagram. The network may further include another device that is not shown in FIG. 1.

It may be understood that the "audio/video" is a general term. The "audio/video" includes a plurality of video frames, one video frame corresponds to one group of packets, and the group of packets carries audio/video data to be parsed and played. FIG. 1 is merely a diagram. The audio/video transmission system may further include another device that is not shown in FIG. 1. A quantity and types of devices included in the system are not limited in embodiments of this application.

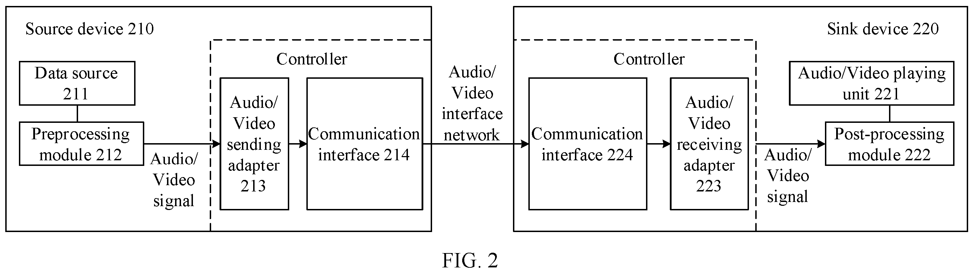

Based on the audio/video transmission system shown in FIG. 1, FIG. 2 is a diagram of an audio/video encoding and decoding system according to this application. The audio/video encoding and decoding system includes a source device 210 and a sink device 220, and the source device 210 establishes a communication connection to the sink device 220 through an audio/video interface network. The audio/video interface network may be a unified multimedia interconnection signal cable, a unified multimedia interconnection link, a unified multimedia interconnection network, or a unified multimedia interconnection channel. The following uses the unified multimedia interconnection channel as an example for description.

The source device 210 may implement an audio/video encoding function. As shown in FIG. 1, the source device 210 may be a set-top box 110 or a smart television 120. Alternatively, the source device 210 may be an audio/video control center with an audio/video encoding capability. For example, the audio/video control center includes one or more servers.

The source device 210 may include a data source 211, a preprocessing module 212, an audio/video sending adapter 213, and a communication interface 214.

The data source 211 may include or may be any type of electronic device configured to collect audio and video, and/or any type of source audio/video generation device, for example, a computer graphics processor configured to generate a computer animation scene or any type of device configured to obtain and/or provide source audio and video, and computer-generated source audio and video. The data source 211 may be any type of memory or storage that stores the source audio and video. The source audio and video may include a plurality of audio/video streams, images, or the like, for example, an ultra-high definition (ultra-high definition, UHD) video, a high definition (high definition, HD) video, and a 4K video captured by a plurality of audio/video capturing apparatuses (for example, a camera).

The preprocessing module 212 is configured to: receive the source audio and video, and preprocess the source audio and video, to obtain audio and video or a plurality of frames of images. For example, preprocessing performed by the preprocessing module 212 may include color format conversion (for example, conversion from RGB to YCbCr), octree structuring, audio/video splicing, audio track combination and deletion, or sound channel quantity adjustment.

The audio/video sending adapter 213 is configured to: receive audio and video or an image, and encode the audio and video, the image, or the image to obtain encoded data (for example, perform encoding according to a PLC algorithm). In some optional cases, a code stream (encoded data) obtained through encoding may also be referred to as a bit stream. If the encoded data is obtained by encoding the audio/video data, the bit stream is an audio/video stream.

The communication interface 214 in the source device 210 may be configured to: receive the encoded data (for example, a video stream or the audio/video stream), and send the encoded data (or a version of encoded data obtained through any other processing) to another device such as the sink device 220 or any other device through the unified multimedia interconnection channel, for storage, display, playing, image reconstruction, or the like.

In the example in FIG. 2, the audio/video sending adapter 213 and the communication interface 214 in the source device 210 may be referred to as a controller or a unified multimedia interconnection controller of the source device 210, and an audio/video receiving adapter 223 and a communication interface 223 in the sink device 220 may be referred to as a controller or a unified multimedia interconnection controller of the sink device 220.

Optionally, the source device 210 includes a bit stream buffer area, and the bit stream buffer area is used to store a bit stream corresponding to one or more coding units.

The sink device 220 may implement an audio/video decoding function. As shown in FIG. 1, the sink device 220 may be any one of the smart television 120 or the audio/video playing device shown in FIG. 1.

The sink device 220 may include an audio/video playing unit 221, a post-processing module 222, the audio/video receiving adapter 223, and the communication interface 224.

The communication interface 224 in the sink device 220 is configured to receive the encoded data (or the version of encoded data obtained through any other processing) from the source device 210 or any other source device, for example, a storage device.

The communication interface 214 and the communication interface 224 may be used for a direct communication link, for example, a direction wired connection, between the source device 210 and the sink device 220, for example, the unified multimedia interconnection channel in FIG. 2. For content of the unified multimedia interconnection channel, refer to the descriptions of FIG. 1. Details are not described herein again.

Corresponding to the communication interface 214, the communication interface 224 may be configured to: for example, receive transmitted data and process the transmitted data through any type of corresponding transmission decoding or processing and/or de-packaging to obtain the encoded data (for example, the video stream or the audio/video stream).

The communication interface 224 and the communication interface 214 each may be configured as a unidirectional communication interface as indicated by an arrow, in FIG. 2, for the corresponding unified multimedia interconnection channel pointing from the source device 210 to the sink device 220, or a bi-directional communication interface, and may be configured to: send and receive a message or the like to establish a connection, and determine and exchange any other information related to the communication link or data transmission such as transmission of encoded compressed data.

The audio/video receiving adapter 223 is configured to: receive the encoded data, and decode the encoded data to obtain decoded data (video, audio and video, or the like).

The post-processing module 222 is configured to perform post-processing on the decoded data to obtain post-processed data (for example, a to-be-displayed image or to-be-played audio and video). Post-processing performed by the post-processing module 222 may include, for example, color format conversion (for example, conversion from YCbCr to RGB), octree reconstruction, audio/video splitting and fusion, or any other processing for generating data for output by the audio/video playing unit 221 or the like.

The audio/video playing unit 221 is configured to receive the post-processed data, to display or play the post-processed data to a user, a viewer, or the like. The audio/video playing unit 221 may be or include any type of display for representing a reconstructed image, for example, an integrated or external display screen or display. For example, the display screen may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of another display screen. The audio/video playing unit 221 may further include one or more audio/video playing modules, and each audio/video playing module may be a sound system, a smart speaker, a power amplifier, or the like.

In an optional implementation, the source device 210 and the sink device 220 may transmit the encoded data through a data forwarding device. For example, the data forwarding device may be a router or a switch. It should be noted that the data forwarding device needs to support a unified multimedia interconnection interface. It may be understood that an interface connection relationship between modules shown in this embodiment of this application is merely an example for description, and does not constitute a limitation on structures of the source device and the sink device. In some other embodiments of this application, for structural limitations of the source device and the sink device, different interface connection manners in the foregoing embodiments or a combination of a plurality of interface connection manners may also be used.

The following describes in detail implementations of the video transmission method provided in embodiments of this application with reference to the accompanying drawings.

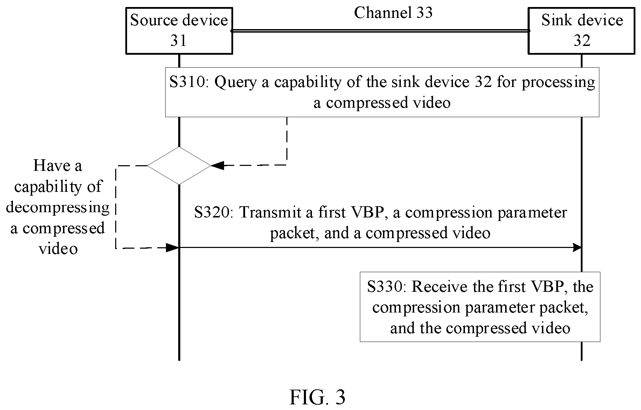

Herein, an example in which the video transmission method in embodiments of this application is performed by the source device 210 and the sink device 220 shown in FIG. 2 is used for description. FIG. 3 is a schematic flowchart 1 of a video transmission method according to this application. A source device 31 is configured to implement a function of the source device 210, and a sink device 32 is configured to implement a function of the sink device 220. In this embodiment, the source device 31 may also be referred to as an audio/video sending device, an audio/video sending end, or a video sending device, and the sink device 32 may also be referred to as an audio/video receiving device, an audio/video playing device, or a video receiving device. The source device 31 and the sink device 32 are connected through a channel 33. The channel 33 may be a unified multimedia interconnection channel. For specific implementation of the unified multimedia interconnection channel, refer to the foregoing descriptions of FIG. 2. Details are not described herein again. A compressed video conforms to a PLC standard. Therefore, the compressed video may be referred to as a PLC video. In some examples, the channel 33 may also be referred to as a connection channel, a first channel, or the like.

In a first possible application scenario, the source device 31 may be the set-top box 110 in FIG. 1, and the sink device 32 may be the smart television 120 in FIG. 1. For example, the set-top box pushes audio/video data to the smart television.

In a second possible application scenario, the source device 31 may be the set-top box 110 in FIG. 1, and the sink device 32 may be any audio/video playing device in FIG. 1, for example, any one of the audio/video playing device 121 to the audio/video playing device 124. For example, the set-top box 110 pushes a video stream to the audio/video device 121.

In a third possible application scenario, the source device 31 may be the smart television 120 in FIG. 1, and the sink device 32 may be any audio/video playing device in FIG. 1, for example, any one of the audio/video playing device 121 to the audio/video playing device 124. For example, the smart television 120 pushes a video stream to the audio/video playing device 121.

The foregoing three possible application scenarios are merely examples provided in this embodiment, and should not be construed as a limitation on this application. In some other possible examples, the source device 31 may be any audio/video playing device (for example, the audio/video playing device 121) in FIG. 1, and the sink device 32 is an audio/video playing device (for example, the audio/video playing device 122) different from the foregoing audio/video playing device.

Refer to FIG. 3. The video transmission method provided in this embodiment includes the following steps S310 to S330.

S310: The source device 31 queries a capability of the sink device 32 for processing a compressed video.

The capability of the sink device 32 for processing a compressed video includes a capability of the sink device 32 for decompressing a compressed video.

For example, the source device 31 queries capability description information of the sink device 32, where the capability description information indicates the capability of the sink device 32 for processing a compressed video.

In some possible cases, the capability description information may also be referred to as a capability descriptor, and the capability descriptor may include one or more bits of information.

In a possible example, the sink device 32 includes a storage, and the storage stores the capability description information. The storage may include but is not limited to a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

In another possible example, the sink device 32 includes a dedicated register, and a status of the dedicated register indicates the capability description information. For example, if a value indicated by the register is 1, the capability description information indicates that the sink device 32 has the capability of decompressing a compressed video, that is, supports decompression of the compressed video; or if the value indicated by the register is 0, the capability description information indicates that the sink device 32 does not have the capability of decompressing a compressed video, that is, does not support decompression of the compressed video.

It should be noted that, because the capability description information indicates whether the sink device 32 has the capability of decompressing a compressed video, in some cases, the capability description information is also referred to as device comprehensive capability description (device comprehensive capability description) information, and an area in which the DCCD information is stored in the sink device 32 is referred to as a DCCD area or is briefly referred to as DCCD. This is not limited in this application.

It should be noted that the DCCD may further store other content for describing an audio/video processing capability of the sink device, for example, an audio processing capability (whether the sink device supports processing of a pure audio data packet) or an HDR display capability (whether the sink device supports displaying of an HDR video of a specific type, for example, HDR vivid).

In a possible implementation, that the source device 31 queries the capability of the sink device 32 for processing a compressed video includes that the source device 31 queries the capability description information of the sink device 32 through a secondary link.

When the channel 33 is a signal cable, the secondary link may be a group of lines in the signal cable. When the channel 33 is a network, for example, a Bluetooth network or a wireless communication technology (wireless fidelity, Wi-Fi) network, the secondary link may be a specified frequency band in the network.

The secondary link (secondary link) is an auxiliary channel (auxiliary channel) included in the channel 33, and is used to transmit additional information, for example, the capability description information or extended display identification data (extended display identification data, EDID) of the sink device 32.

In a possible example, the source device 31 sends a capability query instruction to the sink device 32 through the secondary link. After receiving the instruction, the sink device 32 feeds back a capability of the sink device 32 to the source device 31 through the secondary link. The capability includes the capability of decompressing a compressed video.

In a possible case, there are one or more secondary links on the channel 33, and a transmission rate of the secondary link is low.

If the capability description information indicates that the sink device 32 has the capability of decompressing a compressed video, the source device 31 performs S320; or if the capability description information includes that the sink device 32 does not have the capability of decompressing a compressed video, the source device 31 sends an uncompressed video (for example, a multi-frame image) to the sink device 32.

In this application, the source device 31 may directly query the capability of the sink device 32 for processing a compressed video, and only when the sink device has the capability of decompressing a compressed video, the source device 31 performs S320. This avoids an ineffective communication process between devices and occupation of a transmission resource bandwidth between the devices because the sink device does not have the capability of decompressing a compressed video.

S320: The source device 31 transmits a first VBP, a compression parameter packet, and the compressed video to the sink device 32.

A video compression mode field included in the first VBP is a first value, the first value indicates that a video compression mode is a compressed video, and the compression parameter packet indicates compression parameter information of the compressed video.

The first VBP, the compression parameter packet, and the compressed video are data in a video stream transmitted by the source device 31 to the sink device 32, and may be specifically data in one or more video frames in the video stream.

For example, the source device 31 generates a corresponding video stream based on to-be-transmitted video data (for example, the compressed video), and transmits the video stream that carries the compressed video to the sink device 32.

The following uses an example in which the first VBP, the compression parameter packet, and the compressed video are data in one video frame in the video stream for description.

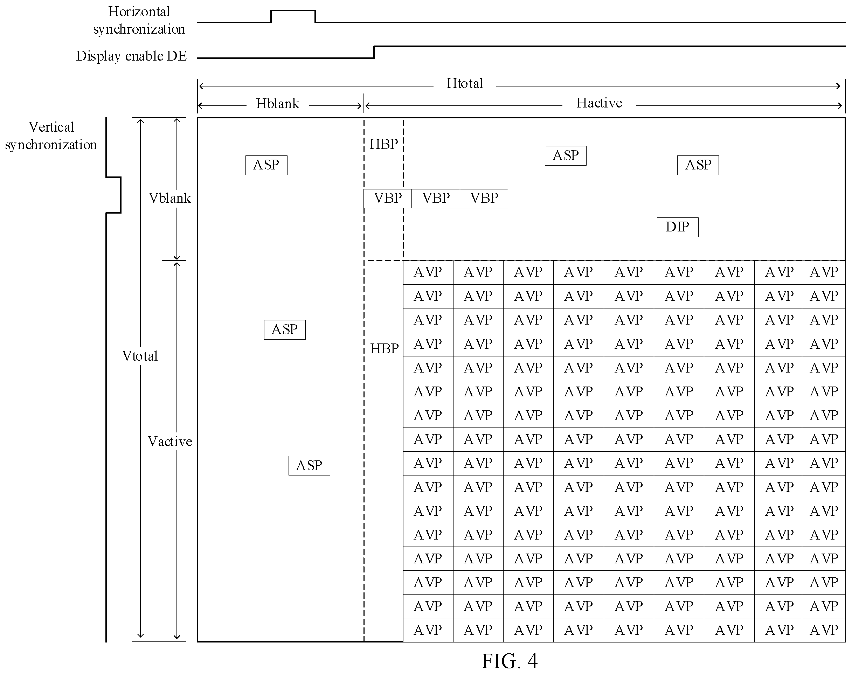

The following describes an example of a format of the video frame in the video stream with reference to FIG. 4. FIG. 4 is a diagram of a structure of a video frame according to this application. In FIG. 4, one video frame includes a multimedia packet and a timing signal.

The multimedia packet includes one or two of an AVP and an audio sample packet (audio sample packet, ASP or ASP packet). The AVP is used to transmit active data, an active pixel, or active pixel data (or referred to as active video pixel data) of a video. For example, in this embodiment, the AVP is used to transmit the compressed video. The ASP is used to transmit audio data. As shown in FIG. 4, a plurality of AVPs are arranged in the video frame by row, and a plurality of AVPs belonging to a same row are one video line.

It should be noted that the structure of the video frame in FIG. 4 is merely an example provided in this application, and should not be construed as a limitation on this application. In some possible implementations, a single video frame may alternatively include only one row of AVPs. This is not limited in this application.

Optionally, when a link bandwidth is greater than a video bandwidth, an ASP may be inserted between two AVPs, but a priority of the ASP is lower than that of the AVP.

Timing signals include a horizontal synchronization signal (Hsync), a vertical synchronization signal (Vsync), and a display enable (display enable, DE) signal. These timing signals are used to describe video timing of the video, that is, when a specific packet or signal should be transmitted. Hsync represents a start of scanning a row of pixels (for example, a signal received by a row register in the sink device 32 is 1), Vsync represents a start of scanning a video frame, and display enable DE represents whether active data can be received (for example, DE=1 indicates that active data can be received, and DE=0 indicates that active data cannot be received).

With reference to FIG. 4, the video timing of the video frame is briefly described as follows: In a blanking period (blank) of horizontal total pixels (Htotal) or a vertical blanking interval (Vblank), the video frame cannot transmit the AVP, but may transmit another packet, for example, the ASP or a DIP; and in an active period (Vactive) of the horizontal total pixels (Htotal) or a vertical active interval, the video frame may transmit the AVP. A start point of Vactive is identified by a horizontal blanking packet (horizontal blanking packet, HBP), and the HBP indicates an end of a horizontal blanking interval. For example, an audio/video sending adapter in the source device 31 sends an HBP in each video line immediately when Hblank ends.

As shown in FIG. 4, the compression parameter packet is sent in the vertical blanking interval, the compression parameter packet is one of a plurality of types of packets included in the DIP, and the compression parameter packet is used to transmit the compression parameter information. For content of the compression parameter information, refer to the following example. Details are not described herein.

In the video frame shown in FIG. 4, the vertical blanking interval of the video frame includes the VBP, and the VBP indicates a video line in which a rising edge of Vsync (in terms of positive polarity) in the video frame is located. For example, the audio/video sending adapter in the source device 31 sends one or more VBPs (for example, three consecutive VBPs in FIG. 4) in each frame, and an ASP and a DIP cannot be inserted between VBPs. For example, if Vsync has the positive polarity, the audio/video sending adapter replaces the HBP with the VBP in the video line in which the rising edge of Vsync is located, and then sends two VBPs consecutively. If Vsync has negative polarity, the audio/video sending adapter replaces the HBP with the VBP in the video line in which a falling edge of Vsync is located, and then sends two VBPs consecutively. The DIP is transmitted after the VBP.

For the VBP, the VBP includes a tunnel packet header and a payload part. For example, the tunnel packet header occupies 4 bytes, the payload part occupies 28 bytes, and a single VBP occupies 32 bytes in total.

In a possible case, the VBP includes a field indicating that a video carried in a plurality of AVPs is a compressed video or an uncompressed video.

The field is carried in the payload part of the VBP. With reference to Table 1 and Table 2, the following separately describes examples of the tunnel packet header and the payload part of the VBP.

**Table 1: Tunnel packet header of a VBP**

| Field | Length (bits) | Descriptions |
|---|---|---|
| ECC | 6 | Error correction code (Error Correction Code, ECC) |
| T | 1 | Fixed to 1, indicating a tunnel packet |
| Length | 9 | Packet length: 28 bytes (bytes) |
| Type | 4 | Fixed to 4b'0001, indicating that the packet is a VBP |
| Flags | 4 | CP: Content protection flag, fixed to "0: unprotected" |
| | | R: Reserved, fixed to 0 |
| | | S: Packet start flag, fixed to 1 |
| | | E: Packet end flag, fixed to 1 |
| ShuttleID | 7 | Adapter identifier (identification, ID) |
| RSIVD | 1 | Reserved |

ShuttleID is used to identify a data transmission channel on a link (Link), and has a value ranging from 0 to 127. For an audio/video adapter (the audio/video sending adapter or the audio/video receiving adapter), this field indicates an adapter ID that is set before delivery.

**Table 2: Payload part of a VBP**

| Field | Length (bits) | Descriptions |
|---|---|---|
| VFC_VER | 6 | Format version of video frame-level control information |
| | | Default: 0x01; and another value reserved |
| C | 1 | Video compression mode (CompressVideoMode) |
| | | 0b: Uncompressed video |
| | | 1b: Compressed video |
| M | 1 | Mute video flag (MuteVideoFlag) |
| | | This bit is set to 1 when muting needs to be output for a video |
| | | When receiving a video frame whose MuteVideoFlag is 1, a sink device needs to identify that muting is required for the frame |
| | | Recommended processing method for the sink device to perform muting: blanking the screen or displaying a previous frame |
| PixelFormat | 4 | Data arrangement format: |
| | | 00h: RGB |
| | | 01h: YCbCr 4: 4: 4 |
| | | 02h: YCbCr 4: 2: 2 |
| | | 03h: YCbCr 4: 2: 0 |
| | | 04h: Y-Only |
| | | 05h: ARGB |
| | | 06h: Raw Data |
| | | 07h-0Fh: Reserved |
| Reserved | 4 | Reserved |
| ColoriMetry | 5 | Pixel color gamut |
| | | RGB/ARGB: |
| | | 00h: sRGB |
| | | 01h: Adobe_{RGB} |
| | | 02h: ITU-R BT.2020 R'G'B' |
| | | 03h: DCI-P3 R'G'B'(D65) |
| | | 04h: DCI-P3 R'G'B'(theater) |
| | | 05h-1Fh: Reserved |
| | | YCbCr 4: 4: 4/YCbCr 4: 2: 2/YCbCr 4: 2: 0: |
| | | 00h: ITU-R BT.601 |
| | | 01h: ITU-R BT.709 |
| | | 02h: Adobe_{YCC601} |
| | | 03h: ITU-R BT.2020 Y'_{C}C'_{BC}C'_{RC} |
| | | 04h: ITU-R BT.2020 Y'C_{B}'C_{R}' |
| | | 05h-1Fh: Reserved |
| | | Y-Only: |
| | | 00h: DICOM PART#14 greyscale standard display |
| | | 01h-1Fh: Reserved |
| | | RAW: |
| | | 00h: Customized configuration |
| | | 01h-1Fh: Reserved |
| QVT | 1 | Whether to enable fast frame transmission |
| | | 0: No |
| | | 1: Enabled |
| DFR | 1 | Whether to enable a variable refresh rate |
| | | 0: No |
| | | 1: Enabled |
| ALLM | 1 | Whether to enable an automatic low-latency mode |
| | | 0: No |
| | | 1: Enabled |
| BitsPerComp | 5 | Bit depth per component: |
| | | 0x08: 8 bits |
| | | 0x0A: 10 bits |
| | | 0x0C: 12 bits |
| | | 0x10: 16 bits |
| | | Another value reserved |
| Reserved | 3 | Reserved |
| PixelClockFreq | 30 | Pixel clock frequency of a video stream |
| | | In a unit of 1 kHz, where a frequency offset is less than 500 ppm |
| HP | 1 | Horizontal synchronization polarity (Hsync Polarity) |
| | | 0b: Hsync is at a high level |
| | | 1b: Hsync is at a low level |
| VP | 1 | Vertical synchronization polarity |
| | | 0b: Vsync is at a high level |
| | | 1b: Vsync is at a low level |
| HActivePixels | 16 | Quantity of horizontal active pixels. Unit: pixel |
| HBlankPixels | 16 | Quantity of pixels in a horizontal blanking interval. Unit: pixel |
| HFrontPorch | 16 | Quantity of pixels in a front porch of a horizontal blanking interval. Unit: pixel |
| HsyncPixels | 16 | Quantity of Hsync pixels. Unit: pixel |
| VActiveLines | 16 | Quantity of active lines in one frame. Unit: line |
| VBlankLines | 16 | Quantity of lines in a vertical blanking interval. Unit: line |
| VFrontPorch | 16 | Quantity of lines in a front porch of a vertical blanking interval. Unit: line |
| VsyncLines | 16 | Quantity of Vsync lines. Unit: line |
| CRC32 | 32 | CRC check |

The video compression mode (CompressVideoMode) field in the VBP indicates whether a video carried by the AVP is a compressed video. If CompressVideoMode in the VBP is a first value (for example, 1b), it indicates that data carried by the AVP in the video frame is a compressed video. If CompressVideoMode in the VBP is a third value (for example, 0b), it indicates that the data carried by the AVP in the video frame is an uncompressed video.

For example, the data carried by the AVP is active pixel data in the compressed video.

It may be understood that, when the data carried by the AVP in the video stream is not a compressed video, the data may also be an uncompressed video, or may be a compressed video that conforms to a standard other than the PLC standard.

In this embodiment, the source device 31 sets, in the VBP, an identifier indicating a format of the AVP, and encapsulates the AVP based on the format indicated by the identifier (that is, corresponding AVPs are encapsulated in a different manner for different video formats), so that the sink device can parse these AVPs based on the format indicated by the identifier and output a video. This avoids a reduction in picture optimization efficiency because the sink device consumes a large quantity of computational power.

The compression parameter packet is further described with reference to FIG. 4. With reference to Table 3 and Table 4, the following separately describes examples of the tunnel packet header and the payload part of the DIP.

**Table 3: Tunnel packet header of a DIP**

| Field | Length (bits) | Descriptions |
|---|---|---|
| ECC | 6 | Error correction code |
| T | 1 | Fixed to 1, indicating a tunnel packet |
| Length | 9 | Fixed to 40 |
| Type | 4 | Fixed to 4b'0011, indicating that the packet is a descriptive information packet DIP |
| Flags | 4 | CP: Content protection flag |
| | | R: Reserved, fixed to 0 |
| | | S: Packet start flag. When a data length of a descriptive information packet of a specific type exceeds 32 bytes and requires a plurality of DIPs for carrying, an S flag of a first DIP is 1, and an S flag of another DIP is 0. |
| | | E: Packet end flag. When a data length of a descriptive information packet of a specific type exceeds 32 bytes and requires a plurality of DIPs for carrying, an E flag of a last DIP is 1, and an E flag of another DIP is 0. When the data length of the descriptive information packet of the specific type requires only one DIP for carrying, both S and E are 1. |
| ShuttleID | 7 | Used to identify a data transmission path on a link (Link), and has a value ranging from 0 to 127. |
| | | For an audio/video adapter, this field indicates an adapter ID that is set before delivery. |
| RSIVD | 1 | Reserved |

**Table 4: Payload part of a DIP**

| Byte | Name | Domain | Descriptions |
|---|---|---|---|
| HB0 | Descriptive information type | 7:0 | Compression parameter DIP packet, used to transmit compression parameter information of a PLC video, and fixed to 0x02 |
| HB1 | INDEX | 3:0 | Index of a DIP, used to identify a sequence number of a current DIP INDEX: A sink end may detect, by checking INDEX, whether any intermediate packets are lost |
| | Reserved | 7:4 | Reserved |
| HB2 | Version | 7:0 | Version number, fixed to 0x01 |
| HB3 | Length | 7:0 | Actually active data length in this packet |
| | | | A quantity of active bytes actually carried by a DIP when an E flag is 1 |
| DB0 | Payload 0 | 7:0 | Payload 0, filled based on a compression parameter |
| DB1 | Payload 1 | 7:0 | Payload 1, filled based on a compression parameter |
| DB2 | Payload 2 | 7:0 | Payload 2, filled based on a compression parameter |
| ... | ... | 7:0 | ... |
| DB29 | Payload 29 | 7:0 | Payload 29, filled based on a compression parameter |
| DB30 | Payload 30 | 7:0 | Payload 30, filled based on a compression parameter |
| DB31 | Payload 31 | 7:0 | Payload 31, filled based on a compression parameter |
| CRC32 | CRC check | 31:0 | CRC32 check values of HB0 to DB31 |

In this embodiment, when a second value corresponding to the descriptive information type field in the DIP is 0x02, the DIP may be referred to as a compression parameter packet. For compression parameter information carried in the payload part in the compression parameter packet, the following provides a possible example. Details are not described herein.

In a possible case, when data lengths of all compression parameters corresponding to one video frame are less than or equal to 32 bytes, the video frame has only one compression parameter packet, and in a Flags field in the compression parameter packet, S=1 and E=1. In other words, a packet start flag of the compression parameter packet is 1, and a packet end flag of the compression parameter packet is 1.

In another possible case, when data lengths of all compression parameters corresponding to one video frame are greater than 32 bytes, the video frame includes a plurality of compression parameter packets.

For example, when data lengths of all compression parameters corresponding to one video frame are 64 bytes, the video frame includes two compression parameter packets. In a Flags field of a 1^{st} compression parameter packet, S=1 and E=0. In other words, a packet start flag of the 1^{st} compression parameter packet is 1 and a packet end flag of the 1^{st} compression parameter packet is 0. In a Flags field of a 2^{nd} compression parameter packet, S=0 and E=1. In other words, a packet start flag of the 2^{nd} compression parameter packet is 0 and a packet end flag of the 2^{nd} compression parameter packet is 1.

In this application, because the compression parameter packet includes a packet start flag and a packet end flag, the packet start flag and the packet end flag may enable the sink device 32 to determine a start or an end of a compression parameter packet sent by the source device 31 to the sink device 32. This helps improve efficiency of the sink device 32 to parse the compression parameter packet, and further improves efficiency of the sink device 32 to decode a compressed video based on a compression packet parameter carried in the compression parameter packet.

In a possible case, when a video frame includes two compression parameter packets, an INDEX field in a 1^{st} compression parameter packet is 1, and an INDEX field in a 2^{nd} compression parameter packet is 2. In another example of this application, if the video frame includes more compression parameter packets, values corresponding to an INDEX field increase sequentially, so that a sink device 32 can determine, by detecting INDEX, whether any intermediate packets are lost.

Still refer to FIG. 3. The video transmission method provided in this embodiment further includes the following step S330.

S330: The sink device 32 receives the first VBP, the compression parameter packet, and the compressed video transmitted by the source device 31.

In a possible example, the sink device 32 receives, through the channel 33, the video stream transmitted by the source device 31. For content of each video frame in the video stream, refer to the descriptions of S320. Details are not described herein again.

In a possible embodiment, the sink device 32 may decode and display the received video stream.

Because a VBP in each video frame carries a video compression mode field, the sink device 32 implements frame-level enabling of a compression mode based on the video compression mode field carried in the VBP in each video frame, that is, parses the compressed video by using a corresponding means.

For example, because all compressed videos in this embodiment conform to the PLC standard, the sink device 32 may parse the compressed video by using a decoding means that conforms to the PLC standard.

In comparison with a DP protocol or an HDMI protocol in which only a compressed video obtained in a specific compression manner (for example, DSC) is transmitted, in this application, a compressed video that conforms to the PLC standard may be transmitted, and the specific compression manner does not include the PLC. This avoids impact on transmission of the compressed video that conforms to the PLC standard, and improves data transmission robustness and efficiency of transmitting the compressed video that conforms to the PLC standard.

In a possible example, the compression parameter information may include the following content:
a quantity of slices (slices), a chunk size (chunk size), a parameter of a prediction algorithm used in a coding process, a transmission delay CU (transmission delay cu), a rate control buffer size (rc buffer size), and the like.

The slice is a division unit of a video frame during coding. One video frame may be divided into a plurality of slices, and each slice may be independently encoded and decoded.

A chunk refers to a technology that divides a data stream into smaller blocks for transmission. The chunk size indicates a size of each chunk.

The transmission delay cu refers to a transmission delay between a reference pixel block and a current pixel block in an intra prediction phase of a video coding process.

The rc buffer size is used for control of a video bit rate and quality. The rc buffer size specifies a size of a buffer area for storing a target bit rate in an encoder, to control an output speed and quality of a bit stream.

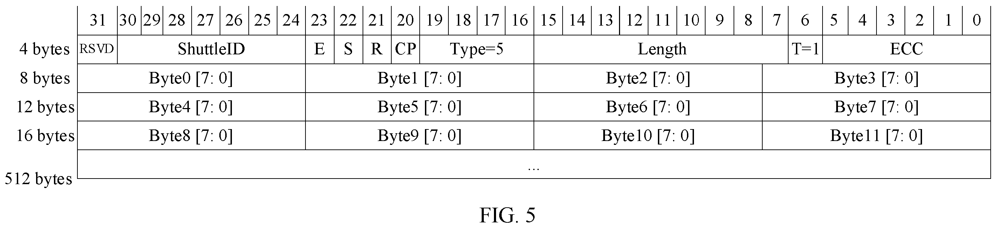

In a possible embodiment, FIG. 5 shows an arrangement manner of data in the AVP. FIG. 5 is a diagram of AVP carrying according to this application. The first row in FIG. 5 indicates packet headers of the AVP. For a meaning of each field, refer to Table 5.

**Table 5: Packet header of an AVP**

| Field | Length (bits) | Descriptions |
|---|---|---|
| ECC | 6 | Error correction code |
| T | 1 | Fixed to 1, indicating a tunnel packet |
| Length | 9 | Packet length (excluding a tunnel packet header), with a value ranging from 0 to 508 |
| Type | 4 | Fixed to 4b'0101, indicating that the packet is an active video packet AVP |
| Flags | 4 | Flag field, whose meaning is defined by an adapter, for example, a video: |
| | | CP: Content protection flag. 0: unprotected; 1: ADCP protected |
| | | R: Reserved, fixed to 0 |
| | | S: Packet start flag, which is a first packet flag in one line of pixels of an active video packet |
| | | E: Packet end flag, which is a last packet flag in one line of pixels of an active video |
| ShuttleID | 7 | Used to identify a data transmission path on a link (Link), and has a value ranging from 0 to 127. |
| | | For an audio/video adapter, this field indicates an adapter ID that is set before delivery. |
| RSIVD | 1 | Reserved |

The arrangement manner of the data in the AVP shown in FIG. 5 is an arrangement manner in a case in which the data belongs to a compressed video. In this case, a payload part of the AVP carries a plurality of groups of data in the compressed video at a granularity of 8 bits. In other words, one AVP carries a plurality of groups of 8-bit data.

In a possible example, one AVP carries a maximum of 508 groups of data.

In a possible case, when the compressed video cannot fill a complete line (4 bytes), the source device 31 pads with 0 to perform structure shaping, to ensure that the payload part in the AVP is 4-byte aligned.

For example, when a data amount of active video pixel data that can be carried in a video frame is limited, and an amount of to-be-transmitted active video pixel data is large, a single video frame may be padded with active video pixel data to a greatest extent. However, a data amount of the pixel data is inconsistent with a maximum amount of pixel data that can be carried in the video frame. As a result, a bit with a part that is not padded with a pixel may exist in the video frame. To resolve the foregoing problem, if a last AVP in an N^{th} line of AVPs cannot be completely filled in the compressed video, a part that is of last 32 bits of the last AVP and that is not padded with the pixel is 0, where the N^{th} line is one of one or more lines.

It should be noted that the last AVP herein is a last AVP in each line of AVPs, but is not a last AVP in the video frame. In addition, the last 32 bits of the last AVP do not mean that, when each AVP in the video frame cannot be completely filled, a part that is of the AVP and that is not padded with a pixel is set to 0, but mean that, when a last AVP among a line of AVPs of the video frame cannot be completely filled, a part that is of last 32 bits of the last AVP and that is not padded with a pixel is set to 0.

For example, when DE is 1, the audio/video sending adapter obtains pixel data from a pixel data interface on a rising edge of a pixel clock, arranges the pixel data in sequence to generate AVPs, and then sends the generated AVPs in sequence. An AVP packet at the end of a line needs to be inserted with padding data (for example, 0 or another specified symbol) for alignment. Except for this, no padding data is inserted within a pixel arrangement of the line.

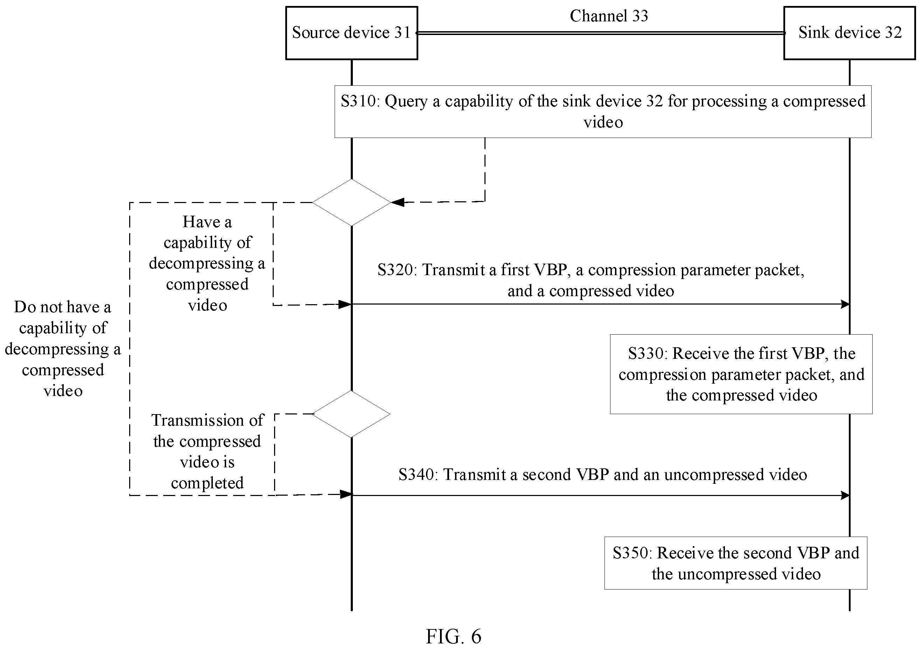

In a possible embodiment, FIG. 6 is a schematic flowchart 2 of a video transmission method according to this application. FIG. 6 is shown on the basis of FIG. 3. If the source device 31 completes transmitting the compressed video, the video transmission method further includes steps S340 and S350.

S340: The source device 31 transmits a second VBP and the uncompressed video to the sink device 32.

A video compression mode field included in the second VBP is the third value, and the third value indicates that a video compression mode is an uncompressed video.

In a possible example, after completing transmitting the video stream that carries the compressed video, the source device 31 transmits a video stream that carries the uncompressed video to the sink device 32.

The video stream that carries the uncompressed video includes one or more video frames, and the video frame includes one or more second VBPs and a plurality of AVPs that carry the uncompressed video.

For content of the second VBP and the AVP, refer to the descriptions of the VBP and the AVP in S320. Details are not described herein again.

In a possible example, a value of a CompressVideoMode field carried in the VBP B is the third value, namely, "0b". When the value of the CompressVideoMode field is 0b, data carried by the plurality of AVPs included in the video frame is the uncompressed video. The sink device 32 disables the compression mode based on the value 0b of the CompressVideoMode field, that is, parses the uncompressed video in a conventional manner.

For example, the foregoing conventional manner may be that the sink device 32 parses format information, for example, resolution and color space format (such as luma-chroma YUV), of the uncompressed video. If a format of the uncompressed video does not match a requirement of the device, pixel format conversion needs to be performed, and then a video obtained through format conversion is sent to a rendering engine for processing and playing.

Because a VBP in each video frame carries a video compression mode field, the sink device 32 may implement frame-level enabling/disabling of a compression mode based on the video compression mode field carried in the VBP in each video frame, that is, parses the compressed video/uncompressed video by using a corresponding means.

When the AVP carries the uncompressed video, the payload part of the AVP may carry a plurality of groups of data in the uncompressed video at a granularity of 8 bits/10 bits/12 bits/16 bits.

S350: The sink device 32 receives the second VBP and the uncompressed video.

For example, the sink device 32 receives the video stream that carries the uncompressed video.

In a possible embodiment, if the sink device 32 does not have the capability of decompressing a compressed video, content of S340 and S350 may be directly performed. For details, refer to the content shown in FIG. 6. Details are not described herein again.

In another embodiment of this application, the foregoing method may alternatively be performed by the audio/video sending adapter 213 and the audio/video receiving adapter 223 in FIG. 2. For example, the audio/video sending adapter 213 may correspond to the source device 210 or the source device 31, and the audio/video receiving adapter may correspond to the sink device 220 or the sink device 32.

It may be understood that, to implement functions in the foregoing embodiments, the source device and the sink device include corresponding hardware structures and/or software modules for performing the functions. A person skilled in the art should be easily aware that the units and method steps in the examples described with reference to embodiments disclosed in this application can be implemented by hardware or a combination of hardware and computer software in this application. Whether a function is performed by hardware or hardware driven by computer software depends on particular application scenarios and design constraint conditions of the technical solutions.

The foregoing describes in detail the video transmission method provided in embodiments with reference to FIG. 1 to FIG. 6. The following describes a video apparatus provided in this embodiment with reference to FIG. 7.

FIG. 7 is a diagram of a structure of a video apparatus according to this application. The video apparatus 700 may be configured to implement a function of any device in the foregoing method embodiments, and therefore can also implement beneficial effects of the foregoing method embodiments. In this embodiment, the video apparatus 700 may be the set-top box 110, the smart television 120, or any sink device shown in FIG. 1, may be the source device 210 or the sink device 220 shown in FIG. 2, or may be a source device or a sink device provided in a subsequent embodiment. It should be understood that the video apparatus 700 may alternatively be a module (for example, a chip) used in any one of the foregoing devices.

As shown in FIG. 7, the video apparatus 700 includes a transceiver module 710 and a processing module 720. The transceiver module 710 and the processing module 720 may collaboratively implement the steps in the foregoing method embodiment. For more detailed descriptions of the transceiver module 710 and the processing module 720, directly refer to related descriptions of the device in the method embodiment shown in the foregoing accompanying drawings. Details are not described herein again.

When the video apparatus implements, by using software, the video transmission method shown in any one of the foregoing accompanying drawings, the video apparatus and units of the video apparatus may also be software modules. The processor invokes the software module to implement the video transmission method. The processor may be implemented by using a central processing unit (central processing unit, CPU), an application-specific integrated circuit (application-specific integrated circuit, ASIC), or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof.

It may be understood that the video apparatus shown in FIG. 7 is merely an example provided in this embodiment. The video apparatus may include more or fewer units based on different video transmission processes. This is not limited in this application.

When the video apparatus is implemented by using hardware, the hardware may be implemented by using a processor or a chip system. The chip system includes one or more chips, and each chip includes a processor and a power supply circuit. The power supply circuit is configured to supply power to the processor, and the processor is configured to implement the method in any possible implementation in the foregoing embodiment by using a logic circuit or executing code instructions. For beneficial effects, refer to the descriptions of any aspect of the foregoing embodiments. Details are not described herein again.

It may be understood that the processor in embodiments of this application may be a CPU, or may be another general-purpose processor, a digital signal processor (digital signal processor, DSP), an ASIC, an FPGA, another programmable logic device, a transistor logic device, a hardware component, or any combination thereof. The general-purpose processor may be a microprocessor or any regular processor.

In addition, the video apparatus 700 shown in FIG. 7 may alternatively be implemented by using a video processing device. FIG. 8 is a diagram of a structure of a video processing device according to this application. The video processing device 800 includes a storage 810 and at least one processor 820. The processor 820 may implement the video transmission method provided in the foregoing embodiment. The storage 810 is configured to store software instructions corresponding to the video transmission method.

In an optional implementation, in hardware implementation, the video processing device 800 may be a chip or chip system in which one or more processors 820 are packaged. For example, when the video processing device 800 is configured to implement the method steps in the foregoing embodiment, the processor 820 included in the video processing device 800 performs the steps of the source device 31 and possible substeps of the source device 31 in the foregoing method. In an optional case, the video processing device 800 may further include a communication interface 830, and the communication interface 830 may be configured to: send and receive data. For example, the communication interface 830 is configured to: receive audio data, send an audio stream, or the like. The communication interface 830 may be implemented by using an interface circuit included in the video processing device 800. Therefore, in some examples, the communication interface 830 may also be referred to as a transceiver of the video processing device. In this embodiment, the communication interface 830 supports wired connection through a unified multimedia interconnection interface.

In this embodiment of this application, the communication interface 830, the processor 820, and the storage 810 may be connected through a bus 840. The bus 840 may be classified into an address bus, a data bus, a control bus, or the like. The bus 840 may be a PCIe bus, an extended industry standard architecture (extended industry standard architecture, EISA) bus, a unified bus (unified bus, Ubus, or UB), a computer express link (compute express link, CXL), a cache coherent interconnect for accelerators (cache coherent interconnect for accelerators, CCIX), another type of bus, or the like.

It should be noted that the video processing device 800 may further perform a function of the video apparatus 700 shown in FIG. 7. Details are not described herein again.

The video processing device 800 provided in this embodiment may be the foregoing set-top box 110, smart television 120, source device 210, source device 31, or the like, or may be another device with a video processing function. This is not limited in this application. For example, when the sink device 32 also has the video processing function, the video processing device 800 may be any one of the foregoing sink devices 32.

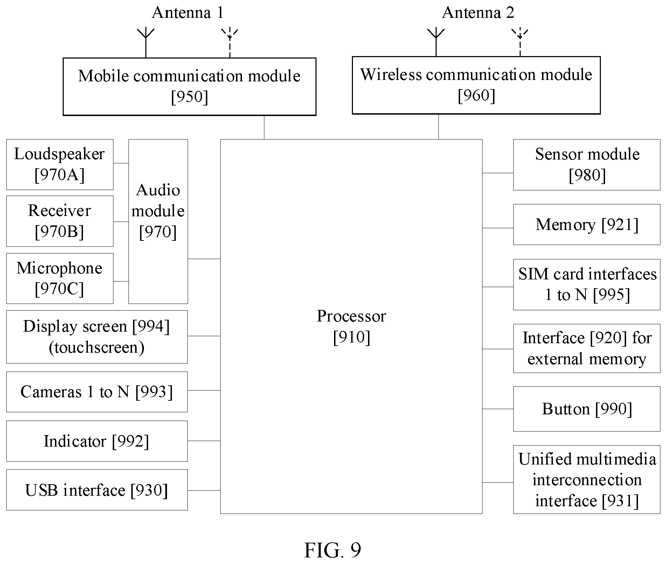

In addition, the video apparatus 700 shown in FIG. 7 may alternatively be implemented by using a sink device. When the video apparatus 700 is implemented by using the sink device, this embodiment provides a possible example. FIG. 9 is a diagram of a structure of a sink device according to this application. The sink device 32 includes a processor 910, an interface 920 for external memory, a memory 921, a USB interface 930, a unified multimedia interconnection interface 931, an antenna 1, an antenna 2, a mobile communication module 950, a wireless communication module 960, an audio module 970, a loudspeaker 970A, a receiver 970B, a microphone 970C, a sensor module 980, a button 990, an indicator 992, a camera 993, a display screen 994, and the like.

The sensor module 980 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure shown in this embodiment does not constitute a specific limitation on the sink device. In some other embodiments, the sink device may include more or fewer components than those shown in the figure, or some components may be combined, or some components may be split, or there may be a different component arrangement. The components shown in the figure may be implemented by hardware, software, or a combination of software and hardware.

The processor 910 may include one or more processing units. For example, the processor 910 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the sink device. The controller may generate an operation control signal based on an instruction operation code and a timing signal, to complete control of instruction fetching and instruction execution.

The storage may be further disposed in the processor 910, and is configured to store instructions and data. In some embodiments, the storage in the processor 910 is a cache. The storage may store instructions or data just used or cyclically used by the processor 910. If the processor 910 needs to use the instructions or the data again, the processor 910 may directly invoke the instructions or the data from the storage. This avoids repeated access and reduces waiting time of the processor 910, thereby improving system efficiency.

In some embodiments, the processor 910 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, a unified multimedia interconnection interface, and/or the like.

It may be understood that an interface connection relationship between modules shown in this embodiment is merely an example for description, and does not constitute a limitation on the structure of the sink device. In some other embodiments, the sink device may alternatively use different interface connection manners in the foregoing embodiments or a combination of a plurality of interface connection manners.

A wireless communication function of the sink device may be implemented through the antenna 1, the antenna 2, the mobile communication module 950, the wireless communication module 960, the modem processor, the baseband processor, and the like. In some embodiments, in the sink device, the antenna 1 and the mobile communication module 950 are coupled, and the antenna 2 and the wireless communication module 960 are coupled, so that the sink device can communicate with a network and another device by using a wireless communication technology.

A wired communication function of the sink device may be implemented through the USB interface 930 or the unified multimedia interconnection interface 931. For example, the sink device receives or sends a video stream through a channel connected to the unified multimedia interconnection interface 931.

The sink device may implement a display function through the GPU, the display screen 994, the application processor, and the like. The GPU is an image processing microprocessor, and is connected to the display screen 994 and the application processor. The GPU is configured to perform mathematical and geometric computation for image rendering. The processor 910 may include one or more GPUs that execute program instructions to generate or change display information.

The display screen 994 is configured to display an image, a video, and the like. The display screen 994 includes a display panel.

The sink device may implement a photographing function through the ISP, the camera 993, the video codec, the GPU, the display screen 994, the application processor, and the like. The ISP is configured to process data fed back by the camera 993. The camera 993 is configured to capture a static image or a video. In some embodiments, the sink device may include one or N cameras 993, where N is a positive integer greater than 1.

In this embodiment, the display screen 994, the video codec, the GPU, the display screen 994, the application processor, and the like may also be collectively referred to as a display unit of the sink device 32, which is configured to process and display a received video stream.

The interface 920 for external memory may be configured to connect to an external storage card, for example, a micro SD card, to extend a storage capability of the sink device. The external storage card communicates with the processor 910 through the interface 920 for external memory, to implement a data storage function. For example, files such as music and a video are stored in the external storage card.

The memory 921 may be configured to store computer-executable program code, and the executable program code includes instructions. The processor 910 runs the instructions stored in the memory 921 to perform various function applications of the sink device and data processing. For example, in this embodiment of this application, the processor 910 may execute the instructions stored in the memory 921, and the memory 921 may include a program storage area and a data storage area.

The program storage area may store an operating system, an application required by at least one function (for example, a sound playing function or an image playing function), and the like. The data storage area may store data (for example, audio data or a phone book) and the like created when the sink device is used. In addition, the memory 921 may include a high-speed random access memory, and may further include a non-volatile memory, for example, at least one magnetic disk storage device, a flash memory device, or a universal flash storage (universal flash storage, UFS).

The sink device may implement an audio function such as music playing and recording through the audio module 970, the loudspeaker 970A, the receiver 970B, the microphone 970C, the application processor, and the like.

The button 990 includes a power button, a volume button, and the like. The button 990 may be a mechanical button or a touch button. The indicator 992 may be an indicator light, and may be configured to indicate a charging status and a power change, or may be configured to indicate a message, a missed call, a notification, and the like.

An embodiment of this application further provides a chip system. The chip system includes a control circuit and an interface circuit. The chip includes a control circuit and an interface circuit. The control circuit is configured to query a capability of a sink device for processing a compressed video, and the control circuit and the interface circuit collaborate to implement a function of the foregoing source device; and/or the interface circuit is configured to receive a first vertical blanking packet VBP, a compression parameter packet, and the compressed video that are transmitted by the source device, a video compression mode field included in the first VBP is a first value, the first value indicates that a video compression mode is a compressed video, the compression parameter packet indicates compression parameter information of the compressed video, and the control circuit and the interface circuit collaborate to implement a function of the foregoing sink device.

The method steps in embodiments of this application may alternatively be implemented by a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in a video processing device and the sink device as discrete components.

All or a part of the foregoing embodiments may be implemented by software, hardware, firmware, or any combination thereof. When embodiments are implemented by the software, all or a part of embodiments may be implemented in a form of computer program product. The computer program product includes one or more computer programs or instructions. When the computer program or the instructions are loaded and executed on a computer, all or a part of procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A video transmission method, wherein the method is performed by a source device or a chip in the source device, and the method comprises:
querying a capability of a sink device for processing a compressed video; and
when the sink device has a capability of decompressing a compressed video, transmitting a first vertical blanking packet VBP, a compression parameter packet, and a compressed video to the sink device, wherein a video compression mode field comprised in the first VBP is a first value, the first value indicates that a video compression mode is a compressed video, and the compression parameter packet indicates compression parameter information of the compressed video.

2. The method according to claim 1, wherein transmitting the compressed video to the sink device comprises:
transmitting an active video packet AVP to the sink device, wherein the AVP is used to carry the compressed video.

3. The method according to claim 2, wherein one AVP carries a plurality of groups of 8-bit data.

4. The method according to any one of claims 1 to 3, wherein the compressed video conforms to a perceptual lossless compression PLC standard.

5. The method according to any one of claims 1 to 4, wherein a descriptive information type byte comprised in the compression parameter packet is a second value.

6. The method according to any one of claims 1 to 5, wherein if one compression parameter packet is transmitted to the sink device, a packet start flag comprised in the compression parameter packet is 1, and a packet end flag comprised in the compression parameter packet is 1.

7. The method according to any one of claims 1 to 5, wherein if a plurality of compression parameter packets are transmitted to the sink device, a packet start flag comprised in a 1^{st} compression parameter packet among the plurality of compression parameter packets is 1, and a packet end flag comprised in a last compression parameter packet among the plurality of compression parameter packets is 1.

8. The method according to any one of claims 1 to 7, wherein the source device is connected to the sink device through an audio/video interface network.

9. The method according to any one of claims 1 to 8, wherein if transmission of the compressed video is completed, the method further comprises:
transmitting a second vertical blanking packet VBP and an uncompressed video to the sink device, wherein a video compression mode field comprised in the second VBP is a third value, and the third value indicates that a video compression mode is an uncompressed video.

10. A video transmission method, wherein the method is performed by a sink device or a chip in the sink device, the sink device provides a capability, queryable by a source device, of processing a compressed video, and when the sink device has a capability of decompressing a compressed video, the method comprises:
receiving a first vertical blanking packet VBP, a compression parameter packet, and a compressed video that are transmitted by the source device, wherein a video compression mode field comprised in the first VBP is a first value, the first value indicates that a video compression mode is a compressed video, and the compression parameter packet indicates compression parameter information of the compressed video.

11. The method according to claim 10, wherein receiving the compressed video transmitted by the source device comprises:
receiving an active video packet AVP transmitted by the source device, wherein the AVP is used to carry the compressed video.

12. The method according to claim 11, wherein one AVP carries a plurality of groups of 8-bit data.

13. The method according to any one of claims 10 to 12, wherein the compressed video conforms to a perceptual lossless compression PLC standard.

14. The method according to any one of claims 10 to 13, wherein a descriptive information type byte comprised in the compression parameter packet is a second value.

15. The method according to any one of claims 10 to 14, wherein if one compression parameter packet transmitted by the source device is received, a packet start flag comprised in the compression parameter packet is 1, and a packet end flag comprised in the compression parameter packet is the 1.

16. The method according to any one of claims 10 to 14, wherein if a plurality of compression parameter packets transmitted by the source device are received, a packet start flag comprised in a 1^{st} compression parameter packet among the plurality of compression parameter packets is 1, and a packet end flag comprised in a last compression parameter packet among the plurality of compression parameter packets is 1.

17. The method according to any one of claims 10 to 16, wherein the source device is connected to the sink device through an audio/video interface network.

18. The method according to any one of claims 10 to 17, wherein the method further comprises:
receiving a second vertical blanking packet VBP and an uncompressed video that are transmitted by the source device, wherein a video compression mode field comprised in the second VBP is a third value, and the third value indicates that a video compression mode is an uncompressed video.

19. A chip, comprising a control circuit and an interface circuit, wherein
the control circuit is configured to query a capability of a sink device for processing a compressed video, and the control circuit and the interface circuit collaborate to perform the method according to any one of claims 1 to 9; and/or
the interface circuit is configured to receive a first vertical blanking packet VBP, a compression parameter packet, and the compressed video that are transmitted by the source device, a video compression mode field comprised in the first VBP is a first value, the first value indicates that a video compression mode is a compressed video, the compression parameter packet indicates compression parameter information of the compressed video, and the control circuit and the interface circuit collaborate to perform the method according to any one of claims 10 to 18.

20. A video processing device, comprising a storage and a transceiver, wherein
the storage is configured to store a compressed video;
the transceiver is configured to transmit a first vertical blanking packet VBP, a compression parameter packet, and the compressed video, wherein a video compression mode field comprised in the first VBP is a first value, the first value indicates that a video compression mode is a compressed video, and the compression parameter packet indicates compression parameter information of the compressed video; and
the storage and the transceiver are configured to collaboratively perform the method according to any one of claims 1 to 9.

21. A display device, comprising a transceiver and a display unit, wherein
the transceiver is configured to receive a first vertical blanking packet VBP, a compression parameter packet, and the compressed video, wherein a video compression mode field comprised in the first VBP is a first value, the first value indicates that a video compression mode is a compressed video, and the compression parameter packet indicates compression parameter information of the compressed video;
the display unit is configured to: process and display the first vertical blanking packet VBP, the compression parameter packet, and the compressed video; and
the transceiver and the display unit are configured to collaboratively perform the method according to any one of claims 10 to 18.

22. A video transmission system, comprising a video processing device and a display device, wherein the video processing device is connected to the display device through an audio/video interface network, wherein
the video processing device is configured to: query a capability of the display device for processing a compressed video; and when the display device has a capability of decompressing a compressed video, transmit a first vertical blanking packet VBP, a compression parameter packet, and a compressed video to the display device, wherein a video compression mode field comprised in the first VBP is a first value, the first value indicates that a video compression mode is a compressed video, and the compression parameter packet indicates compression parameter information of the compressed video; and
the display device is configured to receive the first vertical blanking packet VBP, the compression parameter packet, and the compressed video, wherein the video compression mode field comprised in the first VBP is the first value, the first value indicates that a video compression mode is the compressed video, and the compression parameter packet indicates the compression parameter information of the compressed video.

23. A computer-readable storage medium, wherein the storage medium stores a computer program or instructions, and when the computer program or the instructions are executed by a processing device, the method according to any one of claims 1 to 9 or the method according to any one of claims 10 to 18 is implemented.

24. A computer program product, comprising a computer program or instructions, wherein when the computer program or the instructions are executed by a processing device, the method according to any one of claims 1 to 9 or the method according to any one of claims 10 to 18 is implemented.
